# EUROPEAN PATENT APPLICATION

(11) **EP 1 693 768 A2**
(43) Date of publication of application: **23.08.2006**
(21) Application number: 06003169.7
(22) Date of filing: 16.02.2006
(51) Int. Cl.: G06F 17/30

(54) **Information posting system and information posting method**

(30) Priority: 22.02.2005 JP 2005046043
(71) Applicant: NTT DoCoMo, Inc., Tokyo 100-6150 (JP)
(72) Inventor: Mori, Mayuko NTT DoCoMo, Inc., Chiyoda-ku Tokyo 100-6150 (JP); Shimada, Keiko NTT DoCoMo, Inc., Chiyoda-ku Tokyo 100-6150 (JP)
(74) Representative: GROSSE BOCKHORNI SCHUMACHER

(57) **Abstract**

The invention provides an information presentation system and information presentation method capable of presenting information suitable for user's preference.

An information presentation system 1 comprises a user information DB 9 storing a telephone number of each user terminal and user attribute information in association with each other, a gateway 11 for acquiring an access address URL and a telephone number with reception of an access request for access to an external site from a user terminal, and an access characteristic collecting part 17 for selecting user attribute information, based on the telephone number, and for sequentially updating a marketing information storage part 15 while associating the user attribute information with the access address URL. When a user terminal accesses a portal site, introduction information based on the information stored in the marketing information storage part 15 is displayed on the user terminal, based on the user's attribute.

## Description

### BACKGROUND OF THE INVENTION

### Field of the Invention

The present invention relates to an information posting system and information posting method.

### Description of the Related Art

Conventionally, the server disclosed in Japanese Patent Application Laid Open No. 2004-21817 is known as technology of this field. This server registers user IDs and user attributes for each user using a site that is provided by the server and users are grouped on the basis of the user attributes. Thereafter, when each page in the site is accessed by the respective users, access rankings classified by user attributes are created by totaling the number of times each page is accessed by each of the respective groups to which users belong. Thus, access rankings in which user attributes and the conditions under which each page was accessed by the users of such attributes (user preferences) are associated are obtained. Further, when users log onto the site, a top-ranking page, which has a layout based on the access rankings for the user attributes, that is, a top-ranking page that matches user preferences is posted.

However, conventional servers collect only instances of access to each page within the site, it is not possible to find out the access conditions of users of other sites or the access conditions of users of external networks and so forth, whereby access rankings are created through access collection within a limited range. Such access ranking cannot be said to adequately reflect the diverse preferences of users and it has therefore not been possible to reliably post information matching user preferences.

### SUMMARY OF THE INVENTION

Therefore, an object of the present invention is to provide an information posting system and information posting method that generate access rankings that adequately reflect user preferences and which post information that matches user preferences.

An information presentation system of the present invention is an information presentation system for transmitting introduction information for introducing a content provided from a server existing outside a mobile communication network, to each of mobile communication terminals belonging to the mobile communication network, comprising: user information storing means storing equipment identification information for identifying each of the mobile communication terminals, and user attribute information indicating an attribute of a user of each of the mobile communication terminals; access information acquiring means for, when a request for transmission of the content is transmitted from a mobile communication terminal to the server, acquiring content specific information for specifying the content under the request for transmission, and the equipment identification information of the mobile communication terminal; access characteristic collecting means for selecting the user attribute information stored in the user information storing means, based on the acquired equipment identification information, and for sequentially storing the selected user attribute information and the content specific information acquired by the access information acquiring means, in association with each other into marketing information storing means; and introduction information transmitting means for selecting the content specific information stored in the marketing information storing means, based on an attribute of each user, for each of the mobile communication terminals, and for transmitting the introduction information corresponding to the selected content specific information, to each of the mobile communication terminals.

An information presentation method of the present invention is an information presentation method of transmitting introduction information for introducing a content provided from a server existing outside a mobile communication network, to each of mobile communication terminals belonging to the mobile communication network, comprising a step of letting user information storing means store equipment identification information for identifying each of the mobile communication terminals, and user attribute information indicating an attribute of a user of each of the mobile communication terminals, in association with each other; a step wherein, when a transmission request for transmission of the content is transmitted from a mobile communication terminal to the server, access information acquiring means acquires content specific information for specifying the content under the request for transmission, and the equipment identification information of the mobile communication terminal; a step wherein access characteristic collecting means selects the user attribute information stored in the user information storing means, based on the acquired equipment identification information, and sequentially stores the selected user attribute information and the content specific information acquired by the access information acquiring means, in association with each other into marketing information storing means; and a step wherein introduction information transmitting means selects the content specific information stored in the marketing information storing means, based on an attribute of each user, for each of the mobile communication terminals, and transmits the introduction information corresponding to the selected content specific information, to each of the mobile communication terminals.

In the information presentation system and information presentation method of the present invention, when a mobile communication terminal of a user transmits a request for transmission of a content existing outside the mobile communication network, the equipment identification information of the mobile communication terminal is acquired along with the content specific information, whereby the user attribute information associated with the equipment identification information can be acquired in association with the content specific information. Therefore, the content specific information is stored in association with the user attribute information, and thus the storage result comes to reflect the user's access status to the outside of the mobile communication network. Since the introduction information is transmitted based on the storage result reflecting the access status to the outside as described above, the content of the server existing outside the mobile communication network can be introduced according to user's preference.

The information presentation system of the present invention may be configured as follows: it comprises access frequency calculating means for calculating a count of requests for transmission of the content corresponding to the content specific information, based on the content specific information sequentially stored in the marketing information storing means, and the introduction information transmitting means selects the content to be introduced by the introduction information, based on the count calculated by the access frequency calculating means. In this information presentation system, the content to be introduced to the user by the introduction information is selected based on the count of requests for transmission of the content, and thus the content to be introduced to the user can be rationally selected according to user's preference.

The information presentation system of the present invention may be configured as follows: the introduction information transmitting means determines a display mode in the introduction information of the content to be introduced by the introduction information, based on the count calculated by the access frequency calculating means. In this information presentation system, the introduction information to the user is displayed in the mode associated with the count of requests for transmission of the content.

According to the present invention, the storage result of the content specific information and the user attribute information in association with each other adequately reflects the user's preference based on the access status to the outside of the mobile communication network on a user attribute basis. Since the introduction information is transmitted based on this storage result, it is feasible to generate an access ranking adequately reflecting user's preference and to present information suitable for user's preference.

### BRIEF DESCRIPTION OF THE DRAWINGS

Fig. 1 is an illustration for explaining a configuration of an information presentation system.

Fig. 2 is an illustration showing an example of user attribute information stored in a user information DB.

Fig. 3 is an illustration showing an example of marketing information stored in a marketing information DB.

Fig. 4 is a flowchart showing a process of making marketing information.

Fig. 5 is an illustration showing an example of information transmitted as a request for access to an external site.

Fig. 6 is an illustration showing an example of a screen display of an external site.

Fig. 7 is a flowchart showing a process with a request for access to a portal site.

Fig. 8 is an illustration showing an example of information transmitted as a request for access to a portal site.

Fig. 9 is an illustration showing an example of a screen display of a portal site.

### DESCRIPTION OF THE PREFERRED EMBODIMENTS

The preferred embodiments of the information presentation system and information presentation method according to the present invention will be described below in detail with reference to the drawings.

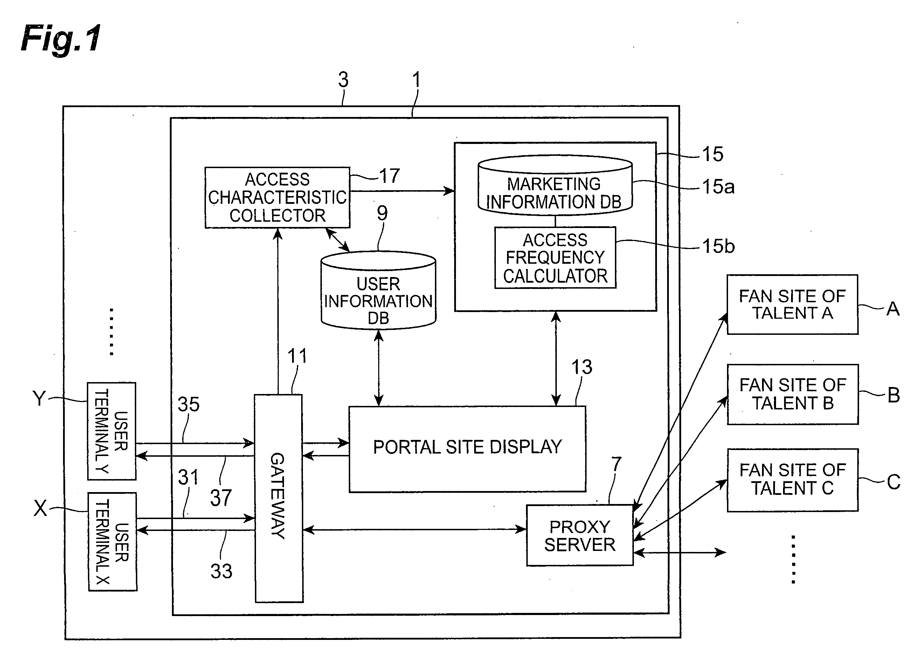

An information presentation system 1 shown in Fig. 1 is a system belonging to a mobile communication network 3 to which a plurality of user terminals (mobile communication terminals) X, Y, etc. belong. These user terminals X, Y, etc. are cell phones capable of accessing sites in a server inside the communication network 3 (which will be referred to hereinafter as "internal sites") and also capable of accessing sites A, B, C in servers outside the communication network 3 (which will be referred to hereinafter as "external sites") through a proxy server 7 in the communication network 3. The information presentation system 1 is a system for introducing such external sites A, B, C, etc. to users of the user terminals X, Y, and so on.

This information presentation system 1 is provided with functional components of user information DB 9, gateway 11, portal site display part 13, marketing information storage part 15, and access characteristic collecting part 17. Each of the components of the information presentation system 1 will be described below in detail.

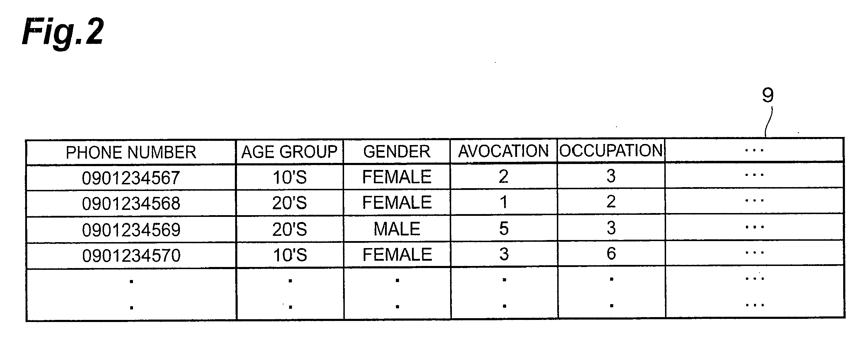

The user information DB 9 shown in Fig. 2 is a database storing information about the users of the respective user terminals X, Y, and so on. In the communication network 3, a unique telephone number is assigned to each of the user terminals X, Y, etc., and this telephone number is used as equipment identification information for identifying an equipment of each terminal. In the user information DB 9, as shown in Fig. 2, the telephone numbers of the user terminals are stored as key information and user's attributes of each terminal are stored in association with the corresponding telephone number. In this example, an age group, gender, avocation, and occupation of a user of each user terminal are stored as user attributes.

The gateway 11 is a part that accepts a request for access to an internal site or to an external site from the user terminals X, Y, and so on. When receiving an access request from a user terminal, the gateway 11 permits the user terminal X, Y, or the like to access an internal site or an external site. The gateway 11 functions as access information acquiring means for acquiring as access information the telephone number of the user terminal having transmitted the access request, and a URL (content specific information) of the site as an access address according to the access request, in association with each other.

The access information acquired by the gateway 11 is transmitted to the access characteristic collecting part 17. When receiving the access information, the access characteristic collecting part 17 acquires the user attributes from the user information DB 9, using the telephone number of the access information as a key. Then the access characteristic collecting part 17 performs a process of associating the user attributes acquired from the user information DB 9, with the URL of the site as an access address included in the access information. The access characteristic information including the user attributes and the URL of the access address thus associated with each other is transmitted to the marketing information DB 15 to be sequentially stored.

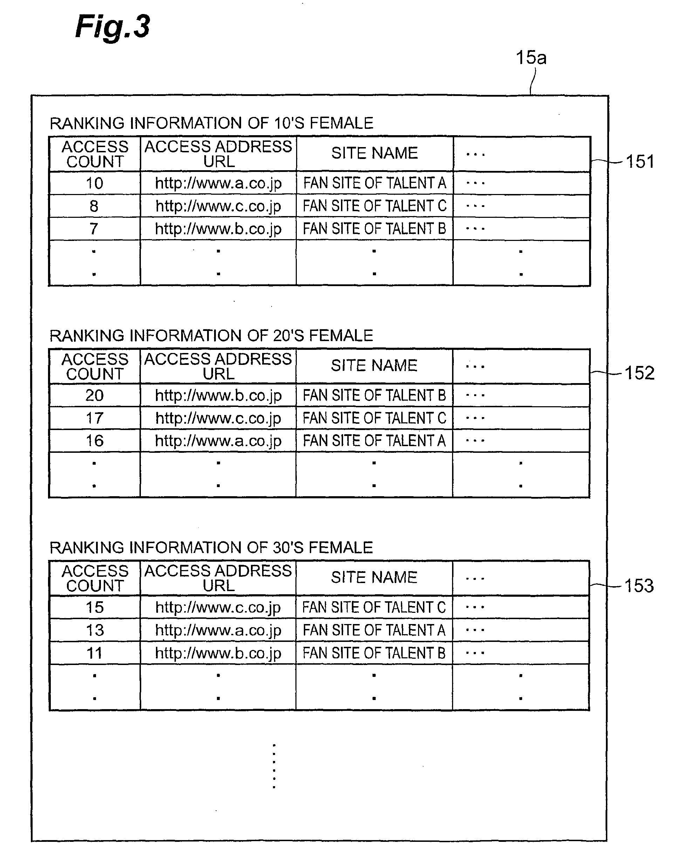

The marketing information storage part 15 has a marketing information DB 15a and an access frequency calculating part 15b, and is a part that stores marketing information based on the access characteristic information transmitted from the access characteristic collecting part 17. The access frequency calculating part 15b tallies the received access characteristic information, calculates access counts based on the user attributes and access address URLs, and creates an access ranking on a user attribute basis. Then the access ranking information on a user attribute basis is stored as marketing information in the marketing information DB 15a, as shown in Fig. 3.

The portal site display part (introduction information transmitting means) 13 is a part that presents a portal site, according to a request for transmission from a user terminal. The portal site is one of the internal sites accessible from the user terminals X, Y, etc., and information presented in this portal site contains screen information for introducing external sites. If a user of a user terminal is interested in an external site introduced, a request for access to the external site will be transmitted to the gateway 11, whereby the terminal can access the external site through the proxy server 7.

Subsequently, an information presentation method by the information presentation system 1 will be described while explaining a specific operation of the information presentation system 1.

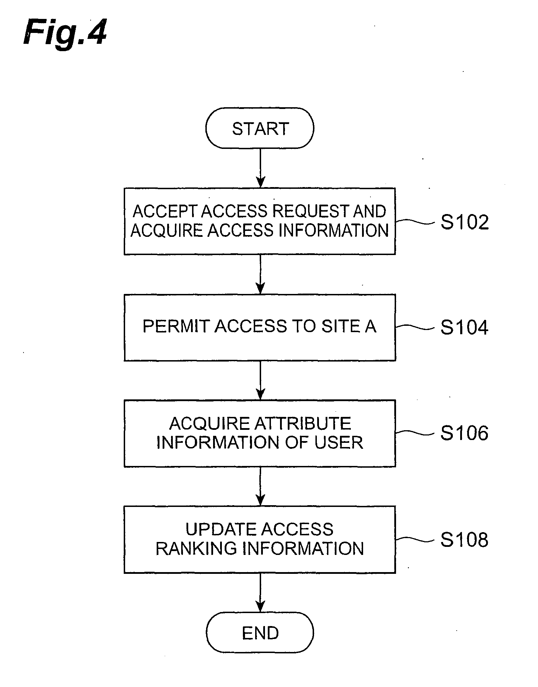

First, a process of making the marketing information in the marketing information storage part 15 in the information presentation system 1 will be described with reference to the flowchart shown in Fig. 4.

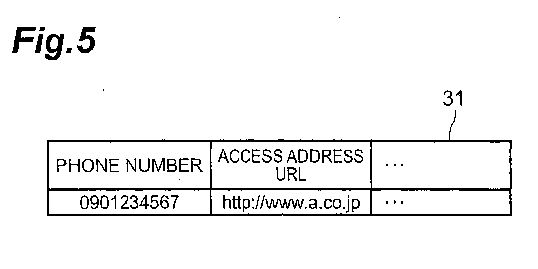

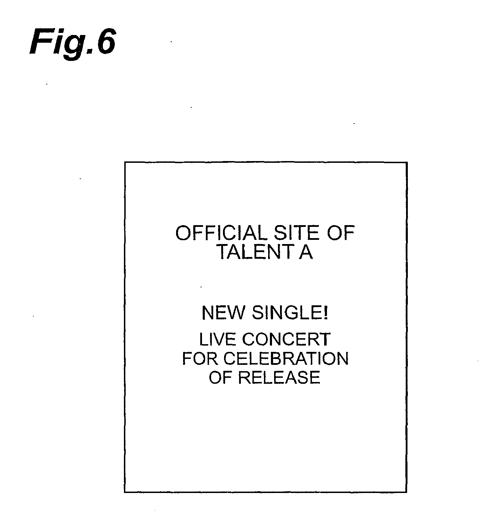

For example, a user terminal X transmits an access request 31 for access to a fan site A of talent A being an external site, to the gateway 11. This access request 31, as shown in Fig. 5, contains access information in which a telephone number "0901234567" of the user terminal X and a URL "http://www.a.co.jp" of the site A as an access address are associated with each other. The gateway 11, receiving the access request 31, acquires the access information (step S102). In accordance with this access request 31, the gateway 11 permits the user terminal X to access the site A through the proxy server 7 (step S104). In this manner, the user terminal X receives the information of the site A stored in a server outside the communication network 3 and, for example, a screen as shown in Fig. 6 is displayed on the user terminal X. On the other hand, the gateway 11 transmits the acquired access information to the access characteristic collecting part 17.

Using the telephone number "0901234567" of the received access information as a key, the access characteristic collecting part 17 acquires the user attribute information corresponding to this telephone number (in this case, information indicating the age group of "10's" and the gender of "female" of the user) from the user information DB 9 (cf. Fig. 2) (step S106). Then the access characteristic collecting part 17 associates the user attribute information of "female in 10's" obtained herein, with the access address URL "http://www.a.co.jp" in the access information and transmits them as access characteristic information to the marketing information storage part 15.

In the marketing information DB 15a of the marketing information storage part 15 (cf. Fig. 3), the access ranking information on a user attribute basis is already stored as the marketing information. This access ranking information is information resulting from a process of tallying access counts to respective sites by users having the respective user attributes, and ordering them. In this case, the marketing information DB 15a stores access ranking information 151 of 10's female, access ranking information 152 of 20's female, access ranking information 153 of 30's female,... In the marketing information storage part 15, the access ranking information 151 corresponding to the user attribute "10's female" is updated based on the access characteristic information acquired from the access characteristic collecting part 17 (S108). Namely, the access count of "http://www.a.co.jp" in the access ranking information 151 of 10's female is counted up and the sequence of the ranking is changed if necessary. The process as described above is performed by the access frequency calculating part 15b and a specific process is to calculate an access count to each URL for each user attribute and to order the sites according to the sequence of access counts.

The process as described above is repeated with every access request for access to an external site from a user terminal, so as to sequentially update the marketing information DB 15a.

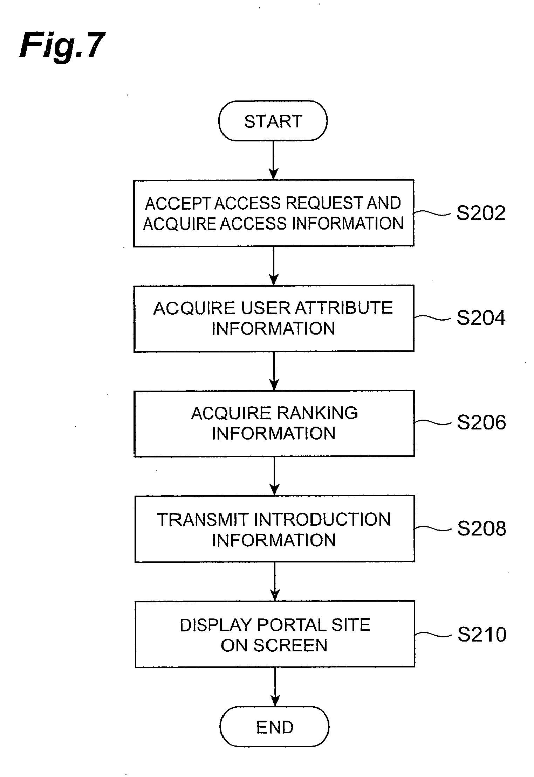

Next, a process with an access request for access to the portal site from a user terminal Y in the information presentation system 1 will be described with reference to the flowchart of Fig. 7.

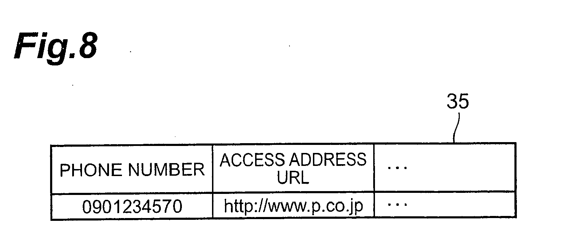

The access request 35 from the user terminal Y contains access information in which a telephone number "0901234570" of the user terminal Y and a URL "htttp://www.p.co.jp" of the portal site as an access address are associated with each other, as shown in Fig. 8. The gateway 11 accepts this access request, acquires the access information, and transmits it to the portal site display part 13 (step S202).

Using the telephone number "0901234570" of the received access information as a key, the portal site display part 13 acquires the user attribute information corresponding to this telephone number (in this case, information indicating the age group of "10's" and the gender of "female" of the user) from the user information DB 9 (cf. Fig. 2) (step S204). Then the portal site display part 13 acquires the access ranking information 151 corresponding to the user attribute "10's female" from the marketing information DB 15a of the marketing information storage part 15 (cf. Fig. 3) (step S206). In this example, it acquires information indicating that the first, second, and third access ranks by 10's female users are the fan site A of talent A, fan site C of talent C, and fan site B of talent B, respectively.

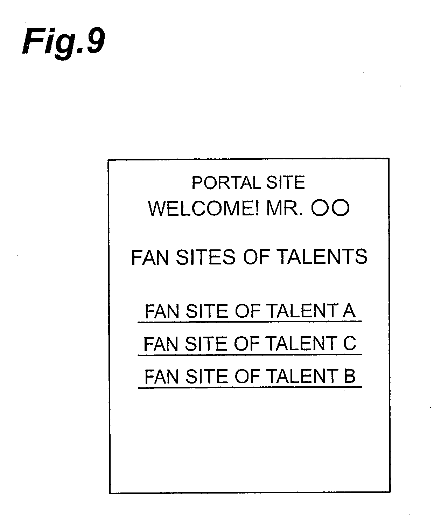

Then the portal site display part 13 selects site A, site C, and site B as sites to be introduced to the user, based on the acquired access ranking information 151. Furthermore, the portal site display part 13 creates introduction information for displaying the sites to be introduced, in the order of site A, site C, and site B, and transmits this introduction information 37 through the gateway 11 to the user terminal Y (step S208). As shown in Fig. 9, "Fan site of talent A," "Fan site of talent C," and "Fan site of talent B" are displayed as arranged in descending order in a part of the display screen of the user terminal Y receiving this introduction information (S210), whereby these external sites A, C, and B are introduced to the user of the user terminal Y.

It is desirable in the information presentation system of this type that sites more interesting users be presented in a portal site in order to efficiently introduce the external sites to the users, and for that purpose, it is preferable to select and introduce sites suitable for preference of each user. The preference of each user about sites is highly related to the user attributes like the age group, gender, avocation, or occupation of the user, and users with the same user attributes are also considered to have the commonality as to the preference for sites. In the above-described information presentation system 1, the preference for sites corresponding to each user attribute is rationally determined based on the access ranking information indicating the levels of access counts by users having the common attributes.

In the information presentation system 1, the telephone number is acquired along with the access address URL with reception of an access request for access to an external site from a user terminal, and thus the user attribute information associated with the telephone number can be acquired from the marketing information storage part 15. Then the URL of the external site as an access address, and the user attribute information are stored as access ranking information in association with each other, and thus this access ranking information comes to reflect the user's access status to the external sites. In this manner, the access ranking information is created by tallying the access status to the external sites with greater degrees of freedom for selection of sites, as compared with the internal sites, and therefore this access ranking information becomes highly accurate information adequately reflecting the preference of users with each attribute. Then the information presentation system 1 introduces the external sites to the users by the screen display of the user terminals on the basis of such highly accurate access ranking information, and therefore it is able to introduce the external sites suitable for the user's preference.

The present invention is not limited to the above-described embodiment. For example, the above embodiment is arranged to create the access ranking information on the age group and gender basis, but it is also possible to create the access ranking information on the other user attribute basis such as the avocation or occupation, and also possible to combine a plurality of such attributes.

## Claims

1. An information presentation system for transmitting introduction information containing a list of information capable of specifying a content, for introducing a content provided from a server existing outside a mobile communication network, to a mobile communication terminal belonging to the mobile communication network, comprising:
user information storing means storing equipment identification information for identifying the mobile communication terminal, and user attribute information indicating an attribute of a user of the mobile communication terminal;
access information acquiring means for, when a request for transmission of the content is transmitted from the mobile communication terminal to the server, acquiring content specific information for specifying the content under the request for transmission, and the equipment identification information of the mobile communication terminal;
access characteristic collecting means for selecting the user attribute information stored in the user information storing means, based on the acquired equipment identification information, and for sequentially storing the selected user attribute information and the content specific information acquired by the access information acquiring means, in association with each other into marketing information storing means; and
introduction information transmitting means for, when a connection request for connection to a predetermined portal site is received from the mobile communication terminal, selecting the content specific information stored in the marketing information storing means, based on the attribute of the user of the mobile communication terminal, and for transmitting the introduction information for introducing the selected content, to the mobile communication terminal.

2. The information presentation system according to Claim 1, comprising:
access frequency calculating means for calculating a count of requests for transmission of the content corresponding to the content specific information, based on the content specific information sequentially stored in the marketing information storing means,
wherein the introduction information transmitting means selects the content to be introduced by the introduction information, based on the count calculated by the access frequency calculating means.

3. The information presentation system according to Claim 2, wherein the introduction information transmitting means determines a display mode in the introduction information of the content to be introduced by the introduction information, based on the count calculated by the access frequency calculating means.

4. An information presentation method of transmitting introduction information containing a list of information capable of specifying a content, for introducing a content provided by a server existing outside a mobile communication network, to a mobile communication terminal belonging to the mobile communication network, comprising:
a step of letting user information storing means store equipment identification information for identifying the mobile communication terminal, and user attribute information indicating an attribute of a user of the mobile communication terminal, in association with each other;
a step wherein, when a transmission request for transmission of the content is transmitted from the mobile communication terminal to the server, access information acquiring means acquires content specific information for specifying the content under the request for transmission, and the equipment identification information of the mobile communication terminal;
a step wherein access characteristic collecting means selects the user attribute information stored in the user information storing means, based on the acquired equipment identification information, and sequentially stores the selected user attribute information and the content specific information acquired by the access information acquiring means, in association with each other into marketing information storing means; and
a step wherein, when a connection request for connection to a predetermined portal site is received from the mobile communication terminal, introduction information transmitting means selects the content specific information stored in the marketing information storing means, based on the attribute of the user of the mobile communication terminal, and transmits the introduction information for introducing the selected content, to the mobile communication terminal.
